# FASCICULE DE BREVET EUROPEEN

(11) **EP 3 374 324 B1**
(45) Date de publication et mention de la délivrance du brevet: **05.05.2021**
(21) Numéro de dépôt: 16806259.4
(22) Date de dépôt: 08.11.2016
(51) Int. Cl.: C03C 3/087, C03C 3/11, C03C 21/00, C03C 23/00

(54) **PROCEDE DE TRAITEMENT DE MATERIAUX VITREUX PAR VOIE DE POLARISATION THERMIQUE**
VERFAHREN ZUR BEHANDLUNG VON GLASIGEN MATERIALIEN DURCH THERMISCHE POLARISATION
METHOD FOR TREATING VITREOUS MATERIALS BY THERMAL POLING

(30) Priorité: 10.11.2015 FR 1560733
(43) Date de publication de la demande: 19.09.2018
(73) Titulaire: Centre National de la Recherche Scientifique, 75016 Paris (FR)
(72) Inventeur: PARAILLOUS, Maxime, 33400 Talence (FR); CARDINAL, Thierry, 33770 Salles (FR); POULON, Angéline, 33460 Arsac (FR); FARGIN, Evelyne, 33170 Gradignan (FR); DUSSAUZE, Marc, 33600 Pessac (FR)
(74) Mandataire: Lavoix
(86) Numéro de dépôt international: PCT/FR2016/052884
(87) Numéro de publication internationale: WO 2017/081396

(56) Documents cités:
- DERIANO S ET AL: "Mechanical strength improvement of a soda-lime-silica glass by thermal treatment under flowing gas", JOURNAL OF THE EUROPEAN CERAMIC SOCIETY, ELSEVIER SCIENCE PUBLISHERS, BARKING, ESSEX, GB, vol. 24, no. 9, 1 août 2004 (2004-08-01), pages 2803-2812, XP027107171, ISSN: 0955-2219 [extrait le 2004-03-09]
- MARC DUSSAUZE ET AL: "How Does Thermal Poling Affect the Structure of Soda-Lime Glass?", JOURNAL OF PHYSICAL CHEMISTRY C, vol. 114, no. 29, 29 juillet 2010 (2010-07-29), pages 12754-12759, XP055286062, US ISSN: 1932-7447, DOI: 10.1021/jp1033905 cité dans la demande
- ALEXEY V. REDKOV ET AL: "How Does Thermal Poling Produce Interstitial Molecular Oxygen in Silicate Glasses?", JOURNAL OF PHYSICAL CHEMISTRY C, vol. 119, no. 30, 30 juillet 2015 (2015-07-30), pages 17298-17307, XP055286072, US ISSN: 1932-7447, DOI: 10.1021/acs.jpcc.5b04513
- A. LEPICARD ET AL: "Surface Reactivity Control of a Borosilicate Glass Using Thermal Poling", JOURNAL OF PHYSICAL CHEMISTRY C, vol. 119, no. 40, 8 octobre 2015 (2015-10-08), pages 22999-23007, XP055286070, US ISSN: 1932-7447, DOI: 10.1021/acs.jpcc.5b07139

## Description

La présente invention concerne un procédé de traitement de matériaux vitreux par voie de polarisation thermique en vue d'améliorer les propriétés mécaniques des matériaux traités, notamment de verres de type silicate sodo-calcique. L'invention concerne également les matériaux obtenus par ce procédé.

### Etat de la technique antérieure

Les verres de type silicate sodo-calcique sont largement utilisés pour la fabrication des vitrages actifs dans le bâtiment ou des miroirs solaires dans le cadre d'usines solaires à concentration. Ces verres peuvent être soumis à des conditions atmosphériques difficiles et doivent donc être résistants aux sollicitations mécaniques du milieu extérieur et garantir la durabilité dans le temps de leurs propriétés.

De nombreux matériaux vitreux sont actuellement commercialisés. Différentes recherches ont été menées jusqu'ici en vue d'améliorer les propriétés mécaniques de ces matériaux. Des procédés d'échanges d'ions (remplacement d'atomes de sodium par des atomes de potassium plus gros) permettent de contraindre la surface du verre et de le rendre plus dur. C'est le procédé utilisé pour améliorer les propriétés mécaniques de surface pour les verres des écrans de téléphones portables. Certains industriels ont recours à des matériaux plus durs comme le saphir.

Des procédés de traitement des matériaux vitreux de type silicate sodo-calcique sont connus pour améliorer les propriétés de ces matériaux : Dussauze M., Rodriguez V. et al. « How does thermal poling affect the structure of soda-lime glass ? », J. Phys. Chem. C 2010, 114, 12754-12759. Ce document décrit des traitements de polarisation thermique sous air ou sous argon et étudie les propriétés des verres obtenus. Des traitements similaires sont décrits dans Redkov A.V. et al, J. Phys. Chem. 119 (30), 2015, 17298-17307 et Lepicard A. et al., J. Phys. Chem. 119 (40), 2015, 22999-23007

Dériano S. et al., Journal of the European Ceramic Society, 24 (2004) 2803-2812 décrit un procédé de traitement d'un verre sodo-calcique, ce procédé comprenant un traitement thermique sous un flux gazeux (N2, NH3 ou de l'air). Ce procédé est supposé conduire à un renforcement des propriétés mécaniques du verre. On constate, à l'issue de ces traitements, des résultats de résistance mécanique limités, en particulier une augmentation de la dureté de 7%. Ce document ne mentionne pas la durabilité des effets du traitement, ni l'amélioration de la résistance aux agressions chimiques ou climatiques, ou au vieillissement.

Les verres de type silicate sodo-calcique utilisés dans les différentes applications mentionées ci-dessus sont généralement soumis à de fortes contraintes mécaniques ou climatiques. Il apparait alors nécessaire d'améliorer les propriétés mécaniques de surface (dureté, résistance à l'abrasion, rayures) de ces matériaux vitreux. Notamment, les matériaux obtenus par les procédés de l'art antérieur ne permettent pas d'assurer une tenue mécanique et une durabilité suffisante pour les applications de type solaires.

L'invention a pour objectif de surmonter les difficultés évoquées ci-dessus, et de fournir des matériaux vitreux, notamment de fournir des verres de type silicate sodo-calcique, présentant une résistance mécanique améliorée par rapport aux verres de l'art antérieur, en particulier une dureté et une résistance aux chocs améliorées, tout en préservant les propriétés optiques du matériau de départ, notamment la transmission de la lumière.

### Résumé de l'invention

L'invention concerne un procédé de traitement d'un verre de type silicate comprenant des oxydes de métaux alcalins et alcalino-terreux ou des oxydes de métaux d¹⁰ ou IIIA, ce procédé comprenant au moins les étapes suivantes :
(a) Incorporation d'azote en superficie du verre,
(b) Traitement de polarisation thermique du matériau issu de (a), sous atmosphère contrôlée chimiquement inerte.

Selon un mode de réalisation préféré, l'étape (a) consiste en un traitement thermique du verre à une température supérieure ou égale à 150°C sous atmosphère contrôlée azotée.

Selon un mode de réalisation préféré l'étape (a) consiste en un traitement thermique du verre sous atmosphère contrôlée azotée, et à l'étape (a) la température est de 200°C à 500°C.

Selon un mode de réalisation préféré, l'étape (a) consiste en un traitement thermique du verre sous atmosphère contrôlée azotée, et à l'étape (a) l'atmosphère est composée essentiellement d'un gaz choisi parmi : N₂, NH₃, éventuellement Ar, He, un mélange de ces gaz comprenant au moins N₂ ou NH₃.

Selon un mode de réalisation encore préféré, à l'étape (a) l'atmosphère est composée essentiellement d'azote N₂, ou d'un mélange d'azote et d'un gaz inerte choisi parmi Ar et He.

Selon un mode de réalisation préféré, à l'étape (b) le matériau est maintenu à une température allant de 150 à 500°C et exposé à un champ électrique caractérisé par une tension allant de 0,1 à 10kV.

Selon un mode de réalisation préféré, à l'étape (b), l'atmosphère contrôlée est composée essentiellement d'un gaz choisi parmi : de l'air sec, O₂, N₂, Ar, He, un mélange de deux ou plus de ces gaz.

Selon un mode de réalisation encore préféré, à l'étape (b) l'atmosphère contrôlée est composée essentiellement d'azote N₂.

Selon un mode de réalisation encore préféré, à l'étape (b) le matériau est maintenu à une température allant de 200 à 300°C.

Selon un mode de réalisation préféré, le verre mis en œuvre présente la composition massique suivante : 0 à 40% Al₂O₃ ; 50 à 97% SiO₂ ; 0 à 15% B₂O₃ ; 0 à 25% ZnO ; 0 à 5 % ZrO₂ ; 0 à 10% TiO₂ ; 0 à 40% Na₂O ; 0 à 40% Li₂O ; 0 à 40% K₂O ; 0 à 40% MgO ; 0 à 50% CaO ; 0 à 40% SrO ; 0 à 40% BaO; 0 à 15% Ag₂O ; 0 à 15% Au₂O₃, Au₂O ; 0 à 15% Cu₂O, et au moins 95% en masse des composants, par rapport à la masse totale du verre, sont choisis parmi : Al₂O₃ ; SiO₂ ; B₂O₃ ; ZnO ; ZrO₂ ; TiO₂ ; Na₂O ; Li₂O ; K₂O ; MgO ; CaO ; SrO ; BaO ; Ag₂O ; Au₂O₃ ; Au₂O ; Cu₂O.

Selon un mode de réalisation préféré, le verre mis en œuvre est un verre de composition suivante, définie en % massique : de 60 à 74% de SiO₂, de 8.2 à 16.4% de Na₂O, de 3.2 à 7.40% de CaO, de 2.8 à 4.30% de MgO, de 0.3 à 1.20% de Al₂O₃, de 0.3 à 1.20% de K₂O et de 0.1 à 0.30% de SO₃.

L'invention concerne encore un matériau susceptible d'être obtenu par le procédé défini ci-dessus, qui est un verre transparent polarisé et comprenant une teneur massique en azote supérieure ou égale à 0.1 %.

Selon un mode de réalisation préféré, la composition du verre obtenu est la suivante, en % massique de 60 à 74% de SiO₂, de 8.2 à 16.4% de Na₂O, de 3.2 à 7.40% de CaO, de 2.8 à 4.30% de MgO, de 0.3 à 1.20% de Al₂O₃, de 0.3 à 1.20% de K₂O de 0.1 à 0.30% de SO₃ et de 0.1% à 5% d'azote.

L'invention concerne encore l'utilisation du procédé pour :
- améliorer la durabilité d'un vitrage, ou
- améliorer la résistance aux rayures d'un écran numérique/tactile, ou
- augmenter la résistance à l'abrasion d'un miroir.

Elle concerne également l'utilisation du procédé pour fabriquer :
- un vitrage pour le bâtiment, ou
- un miroir de panneau solaire, ou
- un écran pour appareils électroniques, ou
- une fibre de verre.

L'invention permet de contrôler de façon précise la chimie de surface et les propriétés mécaniques de matériaux vitreux, en particulier de matériaux de type silicate sodo-calcique. Elle permet d'améliorer les performances mécaniques des verres, en particulier des verres de type silicate sodo-calciques, qui sont connus pour leur utilisation dans un large spectre d'applications.

L'invention permet de modifier la chimie de surface des verres, en particulier des verres de type silicate sodo-calcique, de renforcer leurs performances mécaniques de surface, en particulier d'en améliorer la dureté ainsi que la résistance aux chocs tout en préservant les propriétés optiques, notamment la transmission de la lumière, que l'on évalue par la mesure de la transmittance. Ce procédé est applicable à des verres de toutes dimensions.

De façon étonnante, on a observé un effet de synergie entre les deux étapes du traitement, conduisant à une amélioration des propriétés mécaniques du verre bien supérieure à celle à laquelle l'homme du métier aurait pu s'attendre en observant les effets de chacune de ces étapes prise séparément.

En outre, on a constaté que le procédé de l'invention confère aux verres traités une meilleure résistance au vieillissement. Des tests évaluant la dureté des verres ont montré que celle-ci était maintenue après un traitement de vieillissement climatique /chimique, tandis que les verres de l'art antérieur, soumis au même test de vieillissement, présentent une dégradation très significative de leurs propriétés mécaniques.

Cette résistance au vieillissement n'était nullement prévisible à la lecture de l'art antérieur.

### Description détaillée

L'invention concerne le domaine des matériaux pour l'optique ainsi que les domaines d'application des produits de l'industrie verrière. De façon non limitative, ces verres ont des applications dans les domaines du vitrage dans le bâtiment, dans la fabrication de miroirs pour l'énergie solaire, des écrans pour appareils électroniques (tablettes, écrans de portables...), des fibres optiques.

### Matériaux de départ :

Les verres utilisés sont de type silicate. Ils comprennent avantageusement des oxydes de métaux alcalins et alcalino-terreux ou des oxydes de métaux d¹⁰ et IIIA, comme par exemple des oxydes de Na, Li, K, Mg, Ca, Sr, Ba, Al. En particulier, l'invention concerne les silicates sodo-calciques.

Les verres utilisés comme matériaux de départ présentent avantageusement la composition massique suivante :
∘ 0 à 40% Al₂O₃
∘ 50 à 97% SiO₂
∘ 0 à 15% B₂O₃
∘ 0 à 25% ZnO
∘ 0 à 5 % ZrO₂
∘ 0 à 10% TiO₂
∘ 0 à 40% Na₂O
∘ 0 à 40% Li₂O
∘ 0 à 40% K₂O
∘ 0 à 40% MgO
∘ 0 à 50% CaO
∘ 0 à 40% SrO
∘ 0 à 40% BaO
∘ 0 à 15% Ag₂O
∘ 0 à 15% Au₂O₃, Au₂O
∘ 0 à 15% Cu₂O

Avantageusement, au moins 95% en masse des composants, par rapport à la masse totale du verre, sont choisis parmi : Al₂O₃ ; SiO₂ ; B₂O₃; ZnO ; ZrO₂ ; TiO₂ ; Na₂O ; Li₂O ; K₂O ; MgO ; CaO ; SrO ; BaO ; Ag₂O ; Au₂O₃ ; Au₂O ; Cu₂O.

D'autres espèces non mentionnées dans la liste ci-dessus peuvent représenter jusqu'à 5% massique par rapport à la masse totale du verre.

Avantageusement, les verres de l'invention comprennent de 50 à 97 % massique de SiO₂ et de 3 à 50% massiques de composants choisis parmi les oxydes de métaux alcalins et alcalino-terreux et les oxydes de métaux d¹⁰ et IIIA.

Selon une variante préférée, les verres de l'invention comprennent de 55 à 80% de SiO₂, et de 20 à 45% massiques de composants choisis parmi les oxydes de métaux alcalins et alcalino-terreux, étant entendu que d'autres espèces peuvent représenter jusqu'à 5% massique par rapport à la masse totale du verre.

Leur composition est avantageusement définie en % massique : de 60 à 74% de SiO₂, de 8.2 à 16.4% de Na₂O, de 3.2 à 7.40% de CaO, de 2.8 à 4.30% de MgO, de 0.3 à 1.20% de Al2O3, de 0.3 à 1.20% de K₂O et de 0.1 à 0.30% de SO₃, étant entendu que d'autres espèces non mentionnées dans cette liste peuvent représenter jusqu'à 5% massique par rapport à la masse totale du verre.

De façon préférée, leur composition est définie en % massique : de 60 à 74% de SiO₂, de 8.2 à 16.4% de Na₂O, de 3.2 à 7.40% de CaO, de 2.8 à 4.30% de MgO, de 0.3 à 1.20% de Al₂O₃, de 0.3 à 1.20% de K₂O et de 0.1 à 0.30% de SO₃, et au moins 98%, encore mieux, au moins 99%, en masse des composants, par rapport à la masse totale du verre, font partie du groupe constitué de : SiO₂, Na₂O, CaO, MgO, Al₂O₃, K₂O et SO₃.

Généralement, le matériau de départ est de composition sensiblement homogène.

L'invention consiste en un procédé comprenant au moins deux étapes que l'on applique au matériau de départ décrit ci-dessus.

### Procédé de traitement :

### - Etape (a) :

L'étape (a) consiste en l'incorporation d'azote à la surface, ou en superficie, du verre. Une introduction d'azote en superficie signifie, selon l'invention, qu'après traitement l'azote est essentiellement présent dans les 100 nm à 1 µm d'épaisseur en surface du verre. Les atomes d'azote sont introduits dans le verre, en superficie, par l'un des moyens suivants :
Selon une première variante, on peut bombarder la surface du verre avec un faisceau d'ions azote. Pour cela on peut par exemple utiliser un bombardement ionique.

Selon une seconde variante, préférée, de l'invention, l'étape (a) consiste en un traitement thermique du verre sous atmosphère contrôlée azotée.

Un premier traitement thermique est réalisé à des températures supérieures ou égales à 150°C mais inférieures à la température de transition vitreuse du verre, soit 575°C. De préférence, le traitement thermique est réalisé à des températures supérieures ou égales à 200°C et inférieures ou égales à 550°C. Encore plus préférentiellement le traitement est réalisé à une température allant de 250 à 450°C.

Pour la réalisation de ce traitement thermique, le matériau est placé sous atmosphère contrôlée azotée. Par atmosphère contrôlée azotée, on entend une atmosphère composée de gaz choisis parmi : N₂, NH₃, et éventuellement des gaz chimiquement inertes, de préférence une atmosphère composée essentiellement d'un gaz choisi parmi : N₂, NH₃, et éventuellement Ar, He, ou un mélange de ces gaz comprenant au moins N₂ ou NH₃.

Par « composée essentiellement de » on entend qu'au moins 98% en volume de l'environnement du verre est composé du ou des gaz choisi(s), encore mieux au moins 99%, préférentiellement sensiblement 100%.

De préférence, l'atmosphère comprend moins de 1% de gaz réactifs comme la vapeur d'eau (H₂O) ou l'oxygène (O₂). Avantageusement, elle comprend moins de 500 ppm de gaz réactifs comme la vapeur d'eau ou l'oxygène, encore mieux moins de 200 ppm et de façon préférée moins de 100 ppm.

De préférence, le traitement thermique est réalisé sous atmosphère composée essentiellement d'azote (N₂) ou d'un mélange d'azote et d'un gaz inerte tel que Ar ou He.

Le traitement thermique est réalisé dans une enceinte fermée de façon à permettre le contrôle de l'atmosphère. Cette enceinte fermée peut être un four ou une étuve. Il peut s'agir d'une enceinte thermiquement isolée et munie d'une plaque chauffante. De façon alternative, le traitement thermique peut être réalisé au moyen d'un rayon laser.

La durée du traitement thermique sous atmosphère contrôlée doit être suffisante pour permettre l'incorporation d'atomes d'azote dans la superficie du verre. Elle est adaptée en fonction des moyens mis en œuvre pour provoquer une élévation de la température du verre. Par exemple, si l'on utilise un laser pour chauffer le verre, la température visée est atteinte quasi instantanément et le traitement peut être de l'ordre de la minute. Si l'on met en œuvre une enceinte chauffante de type étuve par exemple, le traitement doit durer suffisamment longtemps pour que la superficie du verre ait atteint la température visée, dans ce cas, la durée du traitement peut être de l'ordre de l'heure, par exemple elle est d'au moins une heure, de préférence de 5 à 50 heures, avantageusement de 10 à 40 heures.

Le traitement thermique peut être appliqué à la totalité du matériau ou à une partie seulement du matériau, au moyen d'un laser notamment qui permet de créer une élévation de température sur une zone définie.

Après traitement, le matériau est ramené à température ambiante, toujours sous atmosphère contrôlée.

A l'issue de l'étape (a), le matériau obtenu peut être stocké, sans précautions particulières, notamment à l'air libre, avant sa mise en œuvre dans l'étape (b).

Le procédé de l'invention donne accès à un verre chargé en atomes d'azote en superficie. On connaît dans l'art antérieur des verres nitrurés, comprenant de l'azote réparti de façon sensiblement uniforme dans la masse du verre, mais ceux-ci sont irisés, non transparents, ce qui ne permet pas leur mise en œuvre dans les applications visées (en particulier panneaux et réflecteurs solaires, écrans d'appareils électroniques).

### - Etape (b) :

Un traitement thermique assisté par champ électrique est ensuite appliqué au matériau obtenu à l'issue de l'étape (a).

Le second traitement de polarisation thermique est réalisé à des températures supérieures ou égales à 100°C mais inférieures à la température de transition vitreuse du verre, soit 575°C. De préférence, le traitement de polarisation thermique est réalisé à des températures supérieures ou égales à 150°C et inférieures ou égales à 500 °C. De préférence le traitement est réalisé à une température allant de 200 à 300°C.

Pour la réalisation de ce second traitement, le matériau est placé sous atmosphère contrôlée. Par atmosphère contrôlée, on entend une atmosphère chimiquement inerte dans les conditions de polarisation thermique, de préférence une atmosphère composée essentiellement d'un gaz choisi parmi : de l'air sec, O₂, N₂, Ar, un mélange de deux ou plus de ces gaz.

Par « composée essentiellement de » on entend qu'au moins 98% en volume de l'environnement du verre est composé du ou des gaz choisi(s), encore mieux au moins 99%, préférentiellement sensiblement 100%.

De préférence, l'atmosphère comprend moins de 1% de vapeur d'eau (H₂O). Avantageusement, elle comprend moins de 500 ppm de vapeur d'eau, encore mieux moins de 200 ppm et de façon préférée moins de 100 ppm.

De préférence, le traitement de polarisation thermique est réalisé sous atmosphère d'azote (N₂). Selon cette variante préférée, on constate une augmentation plus importante de la dureté.

Le traitement de polarisation thermique doit également être effectué sous atmosphère contrôlée dans une enceinte parfaitement hermétique. Le contrôle de cette atmosphère est l'un des paramètres qui joue un rôle primordial dans la qualité du traitement de polarisation thermique.

Le verre est exposé à un champ électrique caractérisé par une tension allant de 0,1 à 10 kV, mieux de 0,2 à 7kV, de préférence de 0,5 à 5kV.

Lors du procédé de polarisation thermique, le matériau est placé entre deux électrodes. Le procédé de polarisation thermique se déroule sous atmosphère non-réactive, ou électrode fermée (« blocking electrode » en anglais).

Les électrodes peuvent être directement en contact avec le verre. Il est possible d'effectuer le même traitement sans contact direct avec l'anode. La distance entre l'anode et le verre doit être contrôlée et de préférence inférieure ou égale à 300µm. Le traitement de polarisation thermique peut également être effectué par le biais de deux électrodes se déplaçant sans contact à la surface du verre.

La durée du traitement de polarisation thermique est de 1 minute à 5 heures, de préférence de 5 minutes à 2 heures, avantageusement de 20 minutes à 60 minutes.

Comme pour l'étape (a), la durée du traitement de l'étape (b) est fonction des moyens mis en œuvre pour provoquer l'élévation de température. L'homme du métier sait adapter cette durée en fonction de la vitesse d'accès à la température de traitement choisie.

Le verre est ensuite ramené à température ambiante tout en maintenant le champ électrique, et toujours sous atmosphère contrôlée. Une fois que le système a atteint la température ambiante, la tension est abaissée jusqu'à 0V. Le traitement de polarisation thermique est alors achevé.

Le traitement thermique peut être appliqué à la totalité du matériau ou à une partie seulement du matériau, au moyen d'un laser notamment qui permet de créer une élévation de température sur une zone définie.

### Le matériau issu du traitement :

Ce procédé de polarisation thermique permet de modifier la chimie de surface du matériau. En appliquant cette différence de potentiel sur le verre, les atomes de sodium chargés positivement migrent au centre du matériau. Afin de respecter la neutralité des charges, le matériau va naturellement, sous atmosphère contrôlée, reformer des liaisons Si-O-Si. En extrême surface, une couche de silice dopée est créée. Ce traitement permet d'accroitre les performances mécaniques en surface, notamment en micro-indentation et en nano-indentation. Les différents paramètres du système (atmosphère, température, tension appliquée, durée) permettent de maîtriser l'épaisseur et la chimie de la couche de silice en surface. Le procédé est stable dans le temps et reproductible.

Lors du procédé de polarisation thermique, le verre est soumis à deux événements chimiques. Le traitement thermique fournit de l'énergie aux atomes, leur donnant ainsi une plus grande capacité à se mouvoir au sein de la structure cristallographique du verre. Cela est d'autant plus vrai pour les espèces présentes au sein du verre ayant des mobilités et coefficients de diffusion élevés : les espèces alcalines comme : Na⁺, Li⁺, Ca²⁺, Mg²⁺ et K⁺. Plus la température de polarisation est élevée, plus la mobilité de ces ions sera importante. La polarisation induite par le champ électrique fait migrer les espèces alcalines au sein du matériau. La migration de ces espèces alcalines, chargées positivement, entraîne la création d'une couche en extrême surface (quelques centaines de nanomètres à quelques micromètres), pauvre en espèces alcalines. Cette couche est appelée zone de déplétion. Le maintien de la différence de potentiel pendant la redescente en température permet de conserver la zone de déplétion.

Afin de compenser le départ de ces espèces chargées positivement, deux mécanismes de recombinaison (appelés aussi mécanismes de compensation) peuvent se produire :
La matrice du verre, composée d'un réseau de liaisons chimiques entre les atomes d'oxygène et de silicium peut se réarranger, se restructurer et former ainsi une couche de silice SiO₂ en extrême surface. Ce mécanisme de recombinaison se produit lors du traitement en atmosphère réactive et en atmosphère non-réactive.

Lorsque le traitement de polarisation est effectué en présence d'ions H⁺, notamment en présence d'eau, la compensation des espèces alcalines positives peut se faire par injection dans le verre d'autres espèces chargées positivement, présentes dans l'atmosphère, qui viennent prendre la place des espèces alcalines dans la maille cristallographique et ainsi compenser leurs départs. Les atomes d'hydrogène H⁺ présents dans l'air sont injectés directement dans le verre lors du traitement et compensent la migration des espèces alcalines. Ce phénomène ne peut avoir lieu dans le cas de l'invention où la polarisation est réalisée sous une atmosphère inerte comme l'argon ou l'azote car ces espèces H⁺ ne sont pas présentes.

Dans le procédé de l'invention, le traitement de polarisation étant réalisé en absence d'ions H⁺, la restructuration du réseau entraîne la création d'une couche de silice SiO₂ de plusieurs centaines de nanomètres en extrême surface. Cette configuration expérimentale du traitement de polarisation thermique est responsable de l'amélioration notable des propriétés mécaniques du verre. Par ailleurs, le prétraitement sous azote de la surface du verre permet une amélioration notable des propriétés mécaniques.

Comparativement aux matériaux de l'art antérieur auxquels seul un traitement de polarisation thermique a été appliqué, les matériaux obtenus par le procédé de l'invention se distinguent par la présence d'azote en surface du matériau.

L'invention concerne également les matériaux susceptibles d'être obtenus par le procédé de l'invention, qui se caractérisent par leur composition particulière :
Il s'agit de matériaux de type silicate. Ils comprennent avantageusement des oxydes de métaux alcalins et alcalino-terreux ou des oxydes de métaux d¹⁰ ou IIIA, comme par exemple des oxydes de Na, Li, K, Mg, Ca, Sr, Ba, A1. En particulier, l'invention concerne des verres de type silicate sodo-calcique polarisés et comprenant une teneur en azote supérieure ou égale à 0.1% massique.

Cet azote est essentiellement présent dans les 100 nm à 1 µm d'épaisseur en surface du verre.

Les matériaux de l'art antérieur ayant simplement subi un traitement de polarisation sous atmosphère contrôlée ne présentent pas cette caractéristique.

L'azote peut être présent dans le matériau sous forme de nitrure ou d'oxynitrure.

Les matériaux de l'invention sont avantageusement des verres transparents, dans le visible, l'UV et les IR.

Par transparent au sens de la présente invention, on entend une transmission supérieure à 80% entre 350 nm et 2500nm.

Les matériaux de l'invention sont avantageusement choisis parmi ceux dont la composition est définie par :
∘ 0 à 40% Al₂O₃
∘ 50 à 97% SiO₂
∘ 0 à 15% B₂O₃
∘ 0 à 25% ZnO
∘ 0 à 5 % ZrO₂
∘ 0 à 10% TiO₂
∘ 0 à 40% Na₂O
∘ 0 à 40% Li₂O
∘ 0 à 40% K₂O
∘ 0 à 40% MgO
∘ 0 à 50% CaO
∘ 0 à 40% SrO
∘ 0 à 40% BaO
∘ 0 à 15%) Ag₂O
∘ 0 à 15% Au₂O₃, Au₂O
∘ 0 à 15% Cu₂O
∘ 0.1% à 5% d'azote.

Avantageusement, au moins 95% en masse des composants, par rapport à la masse totale du verre, sont choisis parmi : Al₂O₃ ; SiO₂ ; B₂O₃ ; ZnO ; ZrO₂ ; TiO₂ ; Na₂O ; Li₂O ; K₂O ; MgO ; CaO ; SrO ; BaO ; Ag₂O ; Au₂O₃ ; Au₂O ; Cu₂O ; de l'azote.

D'autres espèces non mentionnées dans la liste ci-dessus peuvent représenter jusqu'à 5% massique par rapport à la masse totale du verre.

Avantageusement, les verres de l'invention comprennent de 50 à 97 % massique de SiO₂, de 3 à 50% massiques de composants choisis parmi les oxydes de métaux alcalins et alcalino-terreux, 0.1% à 5% massique d'azote.

Selon une variante préférée, les verres de l'invention comprennent, en % massiques, de 55 à 80% de SiO₂, de 20 à 45% de composants choisis parmi les oxydes de métaux alcalins et alcalino-terreux, et 0.1% à 5% d'azote, étant entendu que d'autres espèces peuvent représenter jusqu'à 5% massique par rapport à la masse totale du verre.

L'azote peut notamment être présent sous forme de nitrure, par exemple avec la création de liaisons Si-N, Al-N, ou d'oxynitrure par exemple avec la création de liaisons Si-O-N, Al-O-N, ces exemples étant non limitatifs.

La composition du matériau de l'invention est avantageusement définie, en % massique : de 60 à 74% de SiO₂, de 8.2 à 16.4% de Na₂O, de 3.2 à 7.40% de CaO, de 2.8 à 4.30% de MgO, de 0.3 à 1.20% de Al₂O₃, de 0.3 à 1.20% de K₂O et de 0.1 à 0.30% de SO₃ et de 0.1% à 5% d'azote, étant entendu que d'autres espèces non mentionnées dans cette liste peuvent représenter jusqu'à 5% massique par rapport à la masse totale du verre.

De façon préférée au moins 98%, encore mieux, au moins 99%, en masse des composants, par rapport à la masse totale du verre, font partie du groupe constitué de : SiO₂, Na₂O, CaO, MgO, Al₂O₃, K₂O, SO₃, N.

La polarisation du verre peut être contrôlée : La mesure la plus appropriée est le contrôle de la zone de déplétion des ions mobiles. Cette mesure peut se faire par analyse chimique de surface notamment par microsonde de Castaing, spectroscopie Auger ou par GDOES (pour : « Glow Discharge Optical Emission Spectroscopy » ou spectroscopie d'émission optique de décharge luminescente). Elle peut être accompagnée d'une mesure de génération de second harmonique qui permet de mettre en évidence le champ électrique enterré qui est une conséquence directe du traitement de polarisation. L'analyse de la génération de seconde harmonique est décrite par exemple dans Dussauze M., Rodriguez V. et al. « How does thermal poling affect the structure of soda-lime glass ? », J. Phys. Chem. C 2010, 114, 12754-12759.

Le procédé de l'invention est particulièrement intéressant dans le domaine des matériaux pour l'optique et plus généralement dans tous les domaines d'application de l'industrie verrière.

Par exemple, cette invention trouve son application dans les domaines suivants :
- Amélioration de la durabilité des vitrages,
- Meilleure résistance aux rayures des écrans numériques/tactiles,
- Augmentation de la résistance à l'abrasion des miroirs.

L'invention concerne encore l'utilisation d'un verre tel que défini ci-dessus, comme vitrage dans le bâtiment, comme miroir de panneau solaire, comme écran pour appareils électroniques (tablettes, écrans de portables...), comme fibre optique.

L'invention concerne également un procédé de fabrication d'un vitrage dans le bâtiment, d'un miroir de panneau solaire, d'un écran pour appareils électroniques (tablettes, écrans de portables...), ou d'une fibre optique, ce procédé comprenant le traitement d'un verre suivant les étapes du procédé qui a été décrit ci-dessus.

### Figures :

Figure 1 : représentation schématique d'un montage de polarisation thermique
Figure 2 : graphique illustrant la seconde étape du procédé de l'invention
Figure 3 : Représentation graphique de l'évolution de la dureté Knoop (ordonnée) en fonction de la charge (abscisse en gramme force gf) pour un verre sodo-calcique de référence (■), un verre sodo-calcique recuit sous N₂ (●), un verre sodo-calcique polarisé thermiquement sous N₂ (▲) et un verre sodo-calcique recuit sous N₂ puis polarisé thermiquement sous N₂ (▼).
Figure 4 : Evolution de la nanodureté Berkovich (ordonnée en GPa) en fonction de la charge (abscisse en mN) pour un verre sodo-calcique de référence (■), un verre sodo-calcique recuit sous N₂ (●), un verre sodo-calcique polarisé thermiquement sous N₂ (▲) et un verre sodo-calcique recuit sous N₂ puis polarisé thermiquement sous N₂ (▼).
Figures 5a et 5b : Clichés de microscopie optique des états de surface après les tests climatiques
Plan des clichés de la figure 5a :

| | |
|---|---|
| A1 | B1 |
| A2 | B2 |

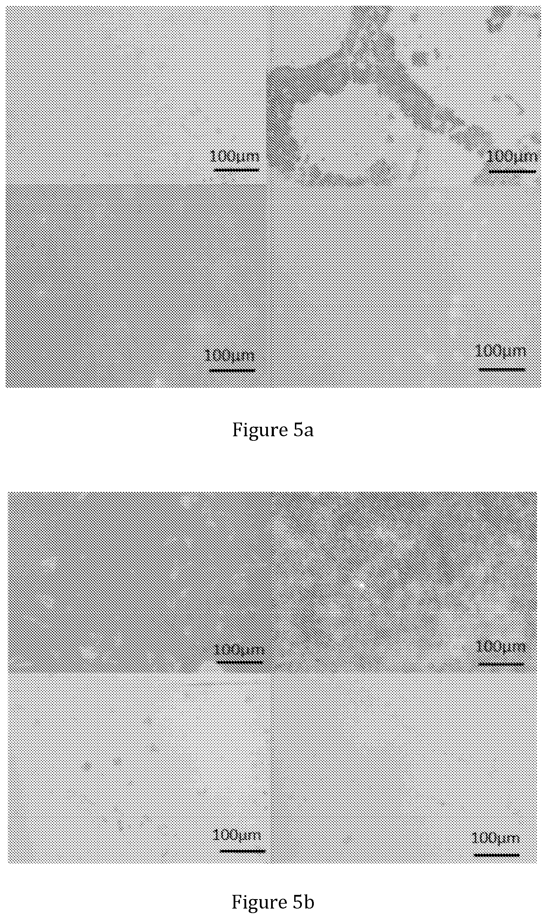

Plan des clichés de la figure 5b :

| | |
|---|---|
| A3 | B3 |
| A4 | B4 |

A1 : verre de référence, B1 : verre de référence après traitement climatique ; A2 : verre de référence recuit sous N₂ puis polarisé thermiquement sous N₂, B2 : verre A2 après traitement climatique ; A3 : verre de référence polarisé thermiquement sous air, B3 : verre A3 après traitement climatique ; A4 : verre de référence polarisé thermiquement sous N₂, B4 : verre A4 après traitement climatique.

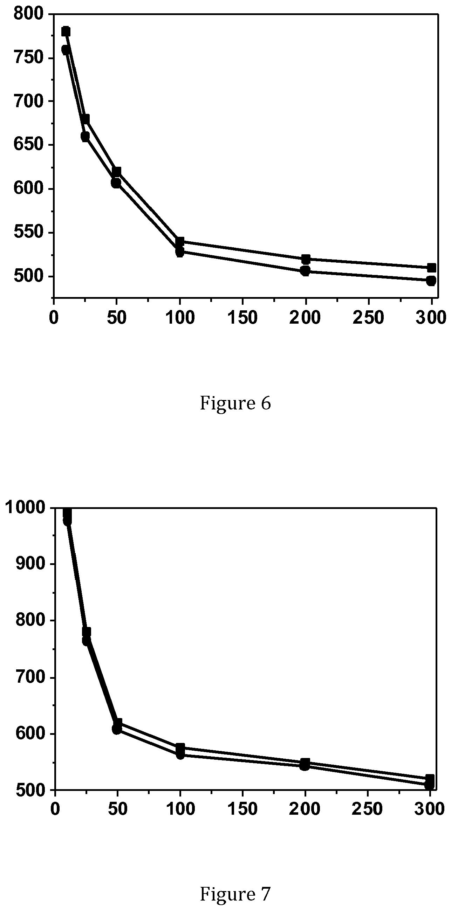

Figure 6 : Evolution de la dureté Knoop (ordonnée) en fonction de la charge (abscisse, en gf) d'un verre sodo-calcique : verre de référence polarisé thermiquement sous N₂ (■), verre de référence polarisé thermiquement sous N₂ puis soumis à un cycle de vieillissement climatique (●)
Figure 7 : Evolution de la dureté Knoop (ordonnée) en fonction de la charge (abscisse, en gf) d'un verre sodo-calcique : verre de référence recuit sous N₂ puis polarisé thermiquement sous N₂ (■) ; verre de référence recuit sous N₂ puis polarisé thermiquement sous N₂ après tests climatiques (●).

### Partie expérimentale :

### I- Matériel et méthodes

### 1-Matériaux mis en œuvre :

Le verre qui a été utilisé (verre sodo-calcique de référence) est un verre disponible commercialement auprès de la société Menzel-Gläser. Sa composition massique est la suivante : 72.2% SiO₂, 14.3% de Na₂O, 6.4 CaO, 4.3% MgO, 1.2% Al2O3, 1.2% K2O et 0.3% SO₃, les % étant des pourcentages massiques.

On a utilisé un échantillon de 1 mm d'épaisseur (dimension de l'ordre de 1 cm²).

### 2- Equipement :

Le traitement a été réalisé dans une enceinte décrite ci-dessous.

Le montage de polarisation thermique est divisé en trois parties :
- Une enceinte hermétique permettant un contrôle de l'atmosphère (vide primaire, secondaire, air sec, argon, azote)
- Un système de chauffage par contact. Les éléments chauffants sont insérés dans une pièce en inconel qui sert également de cathode. Le contrôle de la température est effectué par un thermocouple situé au sein de la pièce en inconel.
- Une source haute tension de 0 à 15kV.
- L'anode et la cathode sont situées en vis-à-vis. La cathode est connectée à un pico-ampèremètre de marque Keithley ®. Une électrode de garde en périphérie de la cathode permet de collecter les courants de surface et d'assurer la mesure du courant à travers l'échantillon par le pico-ampèremètre.

### 3- Méthodes d'évaluation des propriétés du matériau :

- Evaluation de la dureté : Pour la nano-indentation, une pointe de type Berkovitch (NT600 nanoindenter MicroMaterials Limited) a été utilisée. Pour la micro-indentation, on a utilisé une pointe de type Knoop équipée à un appareillage LEICA VMHT AUTO ®.
- Analyse chimique : Un appareil GD-Profiler 2 (HORIBA Jobin Yvon ®) a été utilisé afin de réaliser les profils d'analyse chimique.
- Evaluation de la transmittance : Cary 5000 Varian ® UV/VIS/NIR- Analyse XPS : Les analyses XPS ont été effectuées sur un appareil Thermo VG Scientific ESCALAB ® 220 iXL spectromètre équipé d'une source monochromatique A1 KαX (1486.6 eV). Les échantillons sont placés dans une chambre sous ultra-vide (UHV, 10⁻⁹mbar) à température ambiante. Les données collectées sont mises en forme avec une combinaison de Gaussienne-Lorentzienne pour la modélisation. Le logiciel AVANTAGE ® de Thermofisher Scientific est utilisé pour traiter les données.
- SHG : Une méthode de couplage micro-SHG a été utilisée afin de sonder la génération de seconde harmonique. L'appareil utilisé est un spectromètre Raman confocal HR800 Horiba/Jobin-Yvon ® avec une source laser. La source utilisée pour mesurer le signal de seconde harmonique, est un laser pico-seconde EKSPLA ® PL2200 émettant à une longueur d'onde de 1064 nm.

Le microscope est équipé d'une platine motorisée (x, y, z) qui permet de réaliser des analyses 3D avec une résolution spatiale de l'ordre du micron. Le faisceau incident polarisé est focalisé sur la surface de l'échantillon par un objectif proche infrarouge (de 50x ou 100x). La lumière rétrodiffusée est captée par ce même objectif et redirigée vers l'analyseur. Cet analyseur permet de sélectionner la polarisation d'analyse. Le faisceau ainsi polarisé est dirigé sur un réseau puis sur la camera CCD ce qui permet de sélectionner l'intensité de second harmonique. Cette méthode permet d'accéder à la localisation du champ électrique au sein du matériau par l'identification de la zone présentant le phénomène de second harmonique (ref V. Rodriguez, D. Talaga, F. Adamietz, J.L. Bruneel, M. Couzi, Chem. Phys. Lett. 2006, 431, 190).

### - Tests de vieillissement climatique :

Des analyses ont été effectuées en enceinte climatique afin de simuler différentes atmosphères, d'évaluer la durabilité chimique et d'accélérer le vieillissement des revêtements. La méthode employée permet d'évaluer la tenue du procédé en conditions réelles d'utilisation extérieure.

Le protocole de vieillissement climatique est composé des phases suivantes :
1) Une phase A de pulvérisation sur le verre d'une solution saline à 1% de chlorure de sodium (pH 6.5 à 7.1) pendant une durée de 3 fois 24 heures qui tombe sur les échantillons à une vitesse de 2.0 à 4.0ml / 80cm² / heure.
2) Une phase B d'augmentation de la température de 25°C à 50°C en augmentant le % d'humidité dans l'enceinte de 70 à 95% d'une durée de 3 fois 24 heures.
3) Une phase C de choc thermique de -15°C à 50°C d'une durée de 24 heures.

Un cycle complet consiste en la répétition de six cycles pour une durée totale de 6 semaines. Un cycle dure 7 jours et est composé de la séquence suivante A-B-A-C-A-B-B.

### II- Exemples

Le traitement réalisé comporte deux étapes : la première étape est un traitement thermique du verre sous atmosphère d'azote. La deuxième étape est un traitement de polarisation thermique sous atmosphère contrôlée, inerte chimiquement.

### 1- Etape (a) : Traitement thermique sous atmosphère d'azote

Le traitement a été réalisé dans un tube de mullite à une température voisine de 400°C sous atmosphère contrôlée sous azote (N₂) pendant 24 heures. Le traitement est réalisé à une température proche de la température de transition vitreuse du verre sodo-calcique afin de rendre la surface du verre réactive à l'atmosphère de l'enceinte. Les traitements réalisés à 300°C, 350°C et 400°C ont donné les mêmes résultats. Les rampes de montée et descente en température sont de l'ordre de 15°C/minute.

Le verre partiellement nitruré en surface subit ensuite le traitement de polarisation thermique.

### 2- Etape (b) : Traitement de polarisation thermique sous atmosphère d'azote

Le traitement de polarisation thermique, (appelé « thermal poling » en anglais) est un procédé de traitement thermique contrôlé, assisté par un champ électrique. L'expérience se déroule dans une enceinte fermée sous atmosphère contrôlée, sous électrode fermée, sous argon ou sous N₂. Le non-contrôle de cette atmosphère (fuite, problèmes d'étanchéités, débitmètres) peut entraîner des mécanismes chimiques indésirables altérant les propriétés mécaniques du verre.

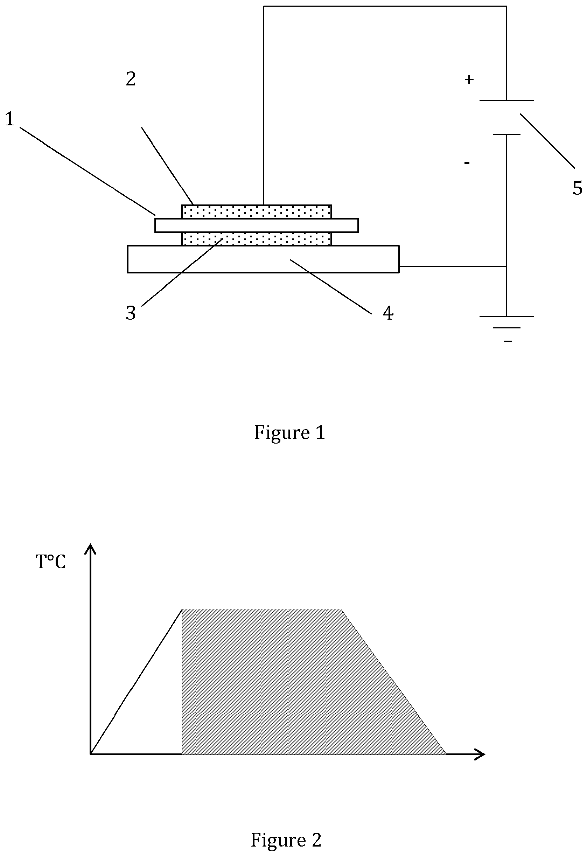

Le traitement de polarisation thermique a été réalisé par élévation de la température de l'échantillon placé entre deux électrodes et l'application d'une différence de potentiel comme illustré sur la figure 1 : L'échantillon de verre 1 est placé entre l'anode 2 et la cathode 3, l'ensemble étant placé sur une plaque chauffante 4. Le tout est placé dans une enceinte fermée (non représentée). Les deux électrodes sont reliées à un générateur de tension 5.

La température est progressivement élevée à la température de polarisation thermique dans une gamme de 200 à 300°C. Une fois la température atteinte, une tension dans une gamme de 1.0 à 3.0 kV est appliquée. Le traitement de polarisation thermique dure de 20 à 60 minutes. La température est ensuite ramenée à température ambiante tandis que la tension est toujours maintenue à la tension de polarisation thermique de l'expérience. Une fois que le système atteint la température ambiante, la tension est abaissée jusqu'à 0 V. Le traitement de polarisation thermique est alors achevé.

La figure 2 illustre graphiquement la seconde étape du procédé de l'invention : la température (ordonnée) est élevée progressivement (l'échelle de temps est représentée schématiquement en abscisse) jusqu'au seuil souhaité, puis une tension est appliquée, cette étape étant représentée par la zone hachurée, enfin la température est réduite jusqu'à l'ambiante et la tension électrique est ramenée à 0V.

### III- Caractérisation :

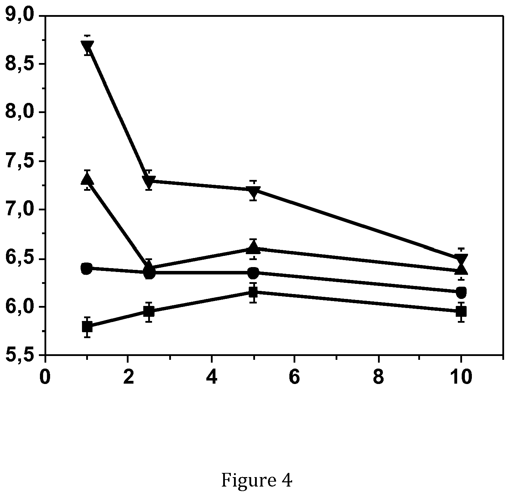

- Evaluation de la dureté : On a comparé l'évolution de la nanodureté Berkovitch en fonction de la charge pour :
- Le verre sodo-calcique de référence (comparatif).
- Un verre obtenu par application au verre sodo-calcique de référence du traitement décrit ci-dessus Etape (a) : Traitement thermique sous atmosphère d'azote (N₂) (comparatif).
- Un verre obtenu par application au verre sodo-calcique de référence du traitement décrit ci-dessus Etape (b) : Traitement de polarisation thermique sous atmosphère d'azote (N₂) (comparatif).
- Un verre obtenu par application au verre sodo-calcique de référence des traitements des étapes (a) recuit sous N₂ puis et (b) polarisation thermique sous N₂ (selon l'invention).
   Les résultats sont illustrés sur la figure 4. On constate pour le verre de l'invention une augmentation de la dureté de près de 40% en nano-indentation pour les faibles charges (1 et 2,5 mN).

- Evaluation de la dureté - test de microindentation :
On a comparé l'évolution de la dureté Knoop en fonction de la charge pour :
- Le verre sodo-calcique de référence (comparatif).
- Un verre obtenu par application au verre sodo-calcique de référence du traitement décrit ci-dessus Etape (a) : Traitement thermique sous atmosphère d'azote (N₂) (comparatif).
- Un verre obtenu par application au verre sodo-calcique de référence du traitement décrit ci-dessus Etape (b) : Traitement de polarisation thermique sous atmosphère d'azote (N₂) (comparatif).
- Un verre obtenu par application au verre sodo-calcique de référence des traitements des étapes (a) recuit sous N₂ puis et (b) polarisation thermique sous N₂ (selon l'invention).

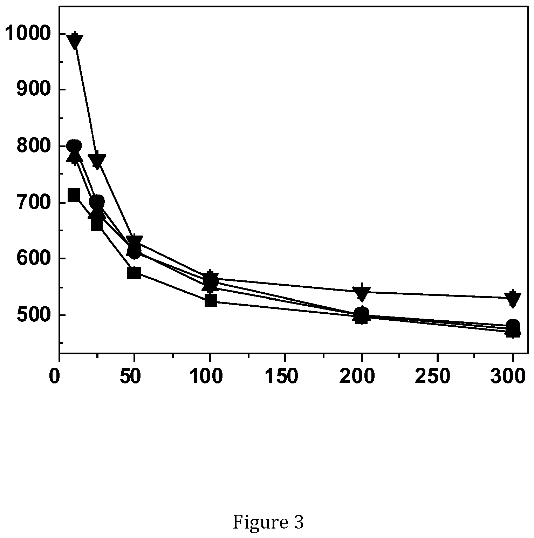

Les résultats sont illustrés sur la figure 3. On constate pour le verre de l'invention une augmentation de la dureté Knoop très supérieure à celle des verres de référence et comparatifs. Notamment pour des charges allant de 1 à 25 gf ou supérieures à 250 gf, on constate un effet de synergie des deux traitements qui n'était nullement prévisible. Une seule de ces étapes permet respectivement d'améliorer la dureté du verre au maximum de 20% environ pour 10gf. Entre 50 et 200 gf l'augmentation est inférieure à 13%. Elle est inférieure à 5% pour une charge de 200gf à 300gf. C'est la synergie des deux étapes réalisées successivement qui permet d'obtenir une amélioration nette de la dureté de près de 40% pour une charge de 10gf. La synergie des deux étapes permet d'augmenter la dureté de plus de 15% pour une charge comprise entre 50gf et 300gf.
- Analyse chimique : La technique mise en œuvre, couplant décapage et analyse spectroscopique du plasma met en évidence une couche de silice en surface entre 300 et 400 nm selon les conditions expérimentales de polarisation thermique. La migration des cations est observée (de plusieurs centaines de nanomètres pour le calcium et le magnésium et jusqu'à plusieurs micromètres pour le sodium et le potassium).
- Evaluation de la transmittance : Les résultats sont décrits dans le tableau 1 ci-dessous. Ils sont exprimés en pourcentage de transmittance (T) avant et après traitement climatique (TC).

| | Verre de référence | Polarisation sous air ⁽¹⁾ | Polarisation sous N₂ ⁽²⁾ | Recuit + Polarisation sous N₂ ⁽³⁾ |
|---|---|---|---|---|
| T avant TC (%) | 91 | 78 | 92 | 92 |
| T après TC (%) | 86 | 71 | 91 | 91 |
| Perte de T (%) | 5,49 | 8,97 | 1,09 | 1,09 |

(1) Verre de référence auquel on a appliqué un traitement de polarisation thermique sous air
(2) Verre de référence auquel on a appliqué un traitement de polarisation thermique sous atmosphère d'azote
(3) Verre de référence auquel on a appliqué un traitement recuit sous atmosphère d'azote suivi d'un traitement de polarisation thermique sous atmosphère d'azote
   Ces analyses ont permis de confirmer la préservation de la qualité de surface. Le verre de référence après tests climatiques voit sa transmittance fortement diminuée (>5%). Dans le cas du verre traité par polarisation thermique sous azote et dans le procédé de l'invention, la transmittance varie de 1% ce qui correspond à la précision de la mesure.

- SHG : On a constaté l'obtention d'un matériau polarisé.
- Vieillissement climatique :

Les figures 5a et 5b illustrent l'état de surface des verres avant (série a) et après (série b) le vieillissement en enceinte climatique.

Les clichés A1 et B1 illustrent l'effet du vieillissement thermique sur un verre non traité, soit une dégradation des qualités optiques du verre.

Les clichés A3/B3 et A4/B4 permettent de valider le rôle du contrôle de l'atmosphère sur le maintien des qualités optiques de surface du verre.

Les clichés A2 et B2 montrent l'effet combiné du recuit sous N₂ et de la polarisation thermique sous N₂ (selon l'invention). On constate que la surface observée par microscopie optique reste inchangée. Ces clichés explicitent l'effet de l'invention sur la durabilité chimique après tests climatiques vis-à-vis d'un verre sodo-calcique de référence. L'état de surface permet de valider le procédé.

On a ensuite évalué les propriétés mécaniques des verres ayant subi le traitement de vieillissement climatique.

Les mêmes tests de micro-indentation (évolution de la dureté Knoop en fonction de la charge) ont été réalisés à la suite des tests en enceinte climatique. Les résultats sont illustrés sur les figures 6 et 7. Ces tests permettent de mettre en évidence le maintien des propriétés mécaniques de dureté après tests climatiques pour les verres ayant subi le traitement de l'invention (figure 7). On constate qu'un traitement de polarisation seul ne suffit pas à garder des propriétés de dureté aussi performantes (figure 6).

## Revendications

1. Procédé de traitement d'un verre de type silicate comprenant des oxydes de métaux alcalins et alcalino-terreux ou des oxydes de métaux d¹⁰ ou IIIA, ce procédé comprenant au moins les étapes suivantes :
(a) Incorporation d'azote en superficie du verre,
(b) Traitement de polarisation thermique du matériau issu de (a), sous atmosphère contrôlée chimiquement inerte.

2. Procédé selon la revendication 1, dans lequel l'étape (a) consiste en un traitement thermique du verre à une température supérieure ou égale à 150°C sous atmosphère contrôlée azotée.

3. Procédé selon la revendication 2, dans lequel à l'étape (a) la température est de 200°C à 500°C.

4. Procédé selon la revendication 2 ou la revendication 3, dans lequel à l'étape (a) l'atmosphère est composée essentiellement d'un gaz choisi parmi : N₂, NH₃, éventuellement Ar, He, un mélange de ces gaz comprenant au moins N₂ ou NH₃.

5. Procédé selon la revendication 4, dans lequel à l'étape (a) l'atmosphère est composée essentiellement d'azote N₂, ou d'un mélange d'azote et d'un gaz inerte choisi parmi Ar et He.

6. Procédé selon l'une quelconque des revendications précédentes, dans lequel à l'étape (b) le matériau est maintenu à une température allant de 150 à 500°C et exposé à un champ électrique **caractérisé par** une tension allant de 0,1 à 10kV.

7. Procédé selon l'une quelconque des revendications précédentes, dans lequel à l'étape (b), l'atmosphère contrôlée est composée essentiellement d'un gaz choisi parmi : de l'air sec, O₂, N₂, Ar, He, un mélange de deux ou plus de ces gaz.

8. Procédé selon la revendication 7, dans lequel à l'étape (b) l'atmosphère contrôlée est composée essentiellement d'azote N₂.

9. Procédé selon l'une quelconque des revendications 6 à 8, dans lequel à l'étape (b) le matériau est maintenu à une température allant de 200 à 300°C.

10. Procédé selon l'une quelconque des revendications précédentes, dans lequel le verre mis en œuvre présente la composition massique suivante : 0 à 40% Al₂O₃ ; 50 à 97% SiO₂ ; 0 à 15% B₂O₃ ; 0 à 25% ZnO ; 0 à 5 % ZrO₂ ; 0 à 10% TiO₂ ; 0 à 40% Na₂O ; 0 à 40% Li₂O ; 0 à 40% K₂O ; 0 à 40% MgO ; 0 à 50% CaO ; 0 à 40% SrO ; 0 à 40% BaO ; 0 à 15% Ag₂O ; 0 à 15% Au₂O₃, Au₂O ; 0 à 15% Cu₂O, et au moins 95% en masse des composants, par rapport à la masse totale du verre, sont choisis parmi : Al₂O₃ ; SiO₂ ; B₂O₃ ; ZnO ; ZrO₂ ; TiO₂ ; Na₂O ; Li₂O ; K₂O ; MgO ; CaO ; SrO ; BaO ; Ag₂O ; Au₂O₃ ; Au₂O ; Cu₂O.

11. Procédé selon l'une quelconque des revendications précédentes, dans lequel le verre mis en œuvre est un verre de composition suivante, définie en % massique : de 60 à 74% de SiO₂, de 8.2 à 16.4% de Na₂O, de 3.2 à 7.40% de CaO, de 2.8 à 4.30% de MgO, de 0.3 à 1.20% de Al₂O₃, de 0.3 à 1.20% de K₂O et de 0.1 à 0.30% de SO₃.

12. Matériau susceptible d'être obtenu par le procédé selon l'une quelconque des revendications précédentes, qui est un verre transparent polarisé et comprenant une teneur massique en azote supérieure ou égale à 0.1% et dont la composition est la suivante, en % massique : de 60 à 74% de SiO₂, de 8.2 à 16.4% de Na₂O, de 3.2 à 7.40% de CaO, de 2.8 à 4.30% de MgO, de 0.3 à 1.20% de Al₂O₃, de 0.3 à 1.20% de K₂O de 0.1 à 0.30% de SO₃ et de 0.1% à 5% d'azote.

13. Utilisation du procédé selon l'une quelconque des revendications 1 à 11 pour :
- améliorer la durabilité d'un vitrage, ou
- améliorer la résistance aux rayures d'un écran numérique/tactile, ou
- augmenter la résistance à l'abrasion d'un miroir.

14. Utilisation du procédé selon l'une quelconque des revendications 1 à 11 pour fabriquer :
- un vitrage pour le bâtiment, ou
- un miroir de panneau solaire, ou
- un écran pour appareils électroniques, ou
- une fibre de verre.

## Patentansprüche

1. Verfahren zum Behandeln eines Silikat-Typ-Glases, welches Alkalimetall- und Erdalkalimetalloxide oder Oxide von d¹⁰- oder IIIA-Metallen aufweist, wobei das Verfahren wenigstens die folgenden Schritte aufweist:
(a) Einarbeiten von Stickstoff in eine Oberfläche des Glases,
(b) thermische-Polarisation-Behandlung des aus (a) stammenden Materials unter chemisch inerter Schutzatmosphäre.

2. Verfahren gemäß Anspruch 1, wobei der Schritt (a) aus einer thermischen Behandlung des Glases bei einer Temperatur größer oder gleich 150 °C unter Stickstoff-Schutzatmosphäre besteht.

3. Verfahren gemäß Anspruch 2, wobei bei Schritt (a) die Temperatur 200 °C bis 500 °C beträgt.

4. Verfahren gemäß Anspruch 2 oder Anspruch 3, wobei bei Schritt (a) die Atmosphäre im Wesentlichen zusammengesetzt ist aus einem Gas ausgewählt aus: N₂, NH₃, eventuell Ar, He, einer Mischung dieser Gase wenigstens aufweisend N₂ oder NH₃.

5. Verfahren gemäß Anspruch 4, wobei bei Schritt (a) die Atmosphäre im Wesentlichen zusammengesetzt ist aus Stickstoff N₂, oder einer Mischung aus Stickstoff und einem Inertgas ausgewählt aus Ar und He.

6. Verfahren gemäß irgendeinem der vorangegangenen Ansprüche, wobei bei Schritt (b) das Material bei einer Temperatur von 150 °C bis 500 °C gehalten wird und einem elektrischen Feld ausgesetzt wird, welches durch eine Spannung von 0,1 bis 10 kV gekennzeichnet ist.

7. Verfahren gemäß irgendeinem der vorangegangenen Ansprüche, wobei bei Schritt (b) die Schutzatmosphäre im Wesentlichen zusammengesetzt aus einem Gas ausgewählt aus: trockener Luft, O₂, N₂, Ar, He, einer Mischung von zwei oder mehreren dieser Gase.

8. Verfahren gemäß Anspruch 7, wobei bei Schritt (b) die Schutzatmosphäre im Wesentlichen zusammengesetzt ist aus Stickstoff N₂.

9. Verfahren gemäß irgendeinem der Ansprüche 6 bis 8, wobei bei Schritt (b) das Material bei einer Temperatur von 200 °C bis 300 °C gehalten wird.

10. Verfahren gemäß irgendeinem der vorangegangenen Ansprüche, wobei das hergestellte Glas die folgende Massenzusammensetzung aufweist: 0 bis 40% Al₂O₃, 50 bis 97% SiO₂, 0 bis 15% B₂O₃, 0 bis 25% ZnO, 0 bis 5% ZrO₂, 0 bis 10% TiO₂, 0 bis 40% Na₂O, 0 bis 40% Li₂O, 0 bis 40% K₂O, 0 bis 40% MgO, 0 bis 50% CaO, 0 bis 40% SrO, 0 bis 40% BaO, 0 bis 15% Ag₂O, 0 bis 15% Au₂O₃, Au₂O, 0 bis 15% Cu₂O und wenigstens 95 Gew.-% Inhaltsstoffe, bezogen auf die Gesamtmasse des Glases, ausgewählt sind aus: Al₂O₃, SiO₂, B₂O₃, ZnO, ZrO₂, TiO₂, Na₂O, Li₂O, K₂O, MgO, CaO, SrO, BaO, Ag₂O, Au₂O₃, Au₂O, Cu₂O.

11. Verfahren gemäß irgendeinem der vorangegangenen Ansprüche, wobei das hergestellte Glas ein Glas der folgenden Zusammensetzung ist, welche in Massenprozent definiert ist: 60 bis 74% SiO₂, 8,2 bis 16,4% Na₂O, 3,2 bis 7,40% CaO, 2,8 bis 4,30% MgO, 0,3 bis 1,20% Al₂O₃, 0,3 bis 1,20% K₂O und 0,1 bis 0,30% SO₃.

12. Material, welches dazu geeignet ist, durch das Verfahren gemäß irgendeinem der vorangegangenen Ansprüche hergestellt zu werden, welches ein transparentes, polarisiertes Glas ist und einen Massengehalt an Stickstoff größer oder gleich 0,1% hat und von welchem die Zusammensetzung in Gew.-% die folgende ist: 60 bis 74% SiO₂, 8,2 bis 16,4% Na₂O, 3,2 bis 7,40% CaO, 2,8 bis 4,30% MgO, 0,3 bis 1,20% Al₂O₃, 0,3 bis 1,20% K₂O, 0,1 bis 0,30% SO₃ und 0,1 bis 5% Stickstoff.

13. Verwendung des Verfahrens gemäß irgendeinem der Ansprüche 1 bis 11 zum:
- Verbessern der Langlebigkeit einer Verglasung oder
- Verbessern der Kratzfestigkeit eines Digital-/Berührungsbildschirms oder
- Erhöhen der Abriebfestigkeit eines Spiegels.

14. Verwendung des Verfahrens gemäß irgendeinem der Ansprüche 1 bis 11 zum Herstellen:
- einer Gebäudeverglasung oder
- eines Solarpaneelspiegels oder
- eines Bildschirms für elektronische Geräte oder
- einer Glasfaser.

## Claims

1. Method for treating a silicate type glass comprising alkali and alkaline earth metal oxides or d¹⁰ or IIIA metal oxides, wherein the method comprises at least the following steps:
(a) Incorporation of nitrogen into the surface of the glass,
(b) Thermal poling treatment of the material from (a) under a chemically inert controlled atmosphere.

2. Method according to claim 1, wherein step (a) consists of a thermal treatment of the glass at a temperature greater than or equal to 150°C in a nitrogen-controlled atmosphere.

3. Method according to claim 2, wherein the temperature is 200°C to 500°C in step (a).

4. Method according to claim 2 or claim 3, wherein in step (a) the atmosphere is essentially composed of a gas chosen from: N₂, NH₃, optionally Ar, He, a mixture of these gases comprising at least N₂ or NH₃.

5. Method according to claim 4, wherein in step (a) the atmosphere is composed essentially of nitrogen N₂, or a mixture of nitrogen and an inert gas selected from Ar and He.

6. Method according to any one of the preceding claims, wherein in step (b) the material is maintained at a temperature ranging from 150 to 500°C and exposed to an electric field **characterized by** a voltage of 0.1 to 10kV.

7. Method according to any one of the preceding claims, wherein in step (b), the controlled atmosphere is composed essentially of a gas selected from: dry air, O₂, N₂, Ar, He, a mixture of two or more of these gases.

8. Method according to claim 7, wherein in step (b) the controlled atmosphere is composed essentially of N₂ nitrogen.

9. Method according to any one of the claims 6 to 8, wherein in step (b) the material is maintained at a temperature of from 200 to 300°C

10. Method according to any one of the preceding claims, wherein the glass used has the following mass composition: 0 to 40% Al₂O₃; 50 to 97% SiO₂; 0 to 15% B₂O₃; 0 to 25% ZnO; 0% to 5% ZrO₂; 0 to 10% TiO₂; 0 to 40% Na₂O; 0 to 40% Li₂O; 0 to 40% K₂O; 0 to 40% MgO; 0 to 50% CaO; 0 to 40% SrO; 0 to 40% BaO; 0 to 15% Ag₂O; 0 to 15% Au₂O₃, Au₂O; 0 to 15% Cu₂O, and at least 95% by weight of the components, relative to the total mass of the glass, are chosen from among: Al₂O₃; SiO₂; B₂O₃; ZnO; ZrO₂; TiO₂; Na₂O; Li₂O; K₂O; MgO; CaO; SrO; BaO; Ag₂O; Au₂O_{3;} Au₂O; Cu₂O.

11. Method according to any one of the preceding claims, wherein the glass used is a glass of the following composition, defined in % by mass: from 60 to 74% of SiO₂, 8.2 to 16.4% of Na₂O, 3.2 to 7.40% CaO, 2.8 to 4.30% MgO, 0.3 to 1.20% Al₂O₃, 0.3 to 1.20% K₂O and 0.1 to 0.30% SO₃.

12. Material obtainable by the method according to any one of the preceding claims, wherein the material is a poled transparent glass and comprises a nitrogen content by mass greater than or equal to 0.1% and whose composition is as follows, by % weight: 60 to 74% SiO₂, 8.2 to 16.4% Na₂O, 3.2 to 7.40% CaO, 2.8 to 4.30% MgO, 0.3 to 1.20% Al₂O₃, 0.3 to 1.20% K₂O, 0.1 to 0.30% SO₃ and from 0.1% to 5% nitrogen.

13. Use of the method according to any one of claims 1 to 11 to:
- improve the durability of glazing, or
- improve the scratch resistance of a digital/tactile screen, or
- increase the resistance to abrasion of a mirror.

14. Use of the method according to any one of the claims 1 to 11 in order to manufacture:
- building glazing, or
- a solar panel mirror, or
- a screen for electronic devices, or
- a fiberglass.
